# EUROPÄISCHE PATENTANMELDUNG

(11) **EP 3 839 615 A1**
(43) Veröffentlichungstag der Anmeldung: **23.06.2021**
(21) Anmeldenummer: 20215471.2
(22) Anmeldetag: 18.12.2020
(51) Int. Cl.: G02C 11/00, G02C 5/14

(54) **BRILLE MIT LADESCHNITTSTELLE**

(30) Priorität: 19.12.2019 DE 102019135328; 30.01.2020 DE 102020102281
(71) Anmelder: Usound GmbH, 8020 Graz (AT)
(72) Erfinder: RUSCONI CLERICI BELTRAMI, Andrea, 1130 Wien (AT); BOTTONI, Ferruccio, 8020 Graz (AT)
(74) Vertreter: Canzler & Bergmeier Patentanwälte Partnerschaft mbB

(57) **Zusammenfassung**

Die Erfindung betrifft eine Brille (1) zur Ein-/Ausgabe von visuellen und/oder auditiven Informationen mit einer Glashalterung (2) zum Halten von Brillengläsern, die zumindest eine erste Gelenkfläche (3) aufweist, zumindest einem Brillenbügel (4), der eine zweite Gelenkfläche (5) aufweist, einem dem Brillenbügel zugeordneten Bügelgelenk (6), über das der Brillenbügel gelenkig mit der Glashalterung derart verbunden ist, dass die beiden Gelenkflächen im eingeklappten Zustand des Brillenbügels voneinander weggeklappt und im ausgeklappten Zustand des Brillenbügels zueinander hingeklappt sind, einem Energiespeicher, der in der Glashalterung und/oder dem Brillenbügel angeordnet ist, und einer Ladeschnittstelle (16) zum Aufladen des Energiespeichers. Erfindungsgemäß ist die Ladeschnittstelle an der ersten und/oder zweiten Gelenkfläche angeordnet.

## Beschreibung

Die vorliegende Erfindung betrifft eine Brille zur Ein-/Ausgabe von visuellen und/oder auditiven Informationen mit einer Glashalterung zum Halten von Brillengläsern, die zumindest eine erste Gelenkfläche aufweist, zumindest einem Brillenbügel, der eine zweite Gelenkfläche aufweist, einem dem Brillenbügel zugeordneten Bügelgelenk, über das der Brillenbügel, insbesondere in einem Gelenkbereich der Brille, gelenkig mit der Glashalterung derart verbunden ist, dass die beiden Gelenkflächen im eingeklappten Zustand des Brillenbügels voneinander weggeklappt und im ausgeklappten Zustand des Brillenbügels zueinander hingeklappt sind, einem Energiespeicher, der in der Glashalterung und/oder dem Brillenbügel angeordnet ist, und einer Ladeschnittstelle zum Aufladen des Energiespeichers. Des Weiteren betrifft die Erfindung eine Ladestation zum Laden einer Brille zur Ein-/Ausgabe von visuellen und/oder auditiven Informationen mit einer Brillenaufnahme, in die die Brille im eingeklappten Zustand eingelegt werden kann, und zumindest einer Stromschnittstelle zum Laden eines Energiespeichers der Brille. Ferner betrifft die Erfindung ein Brillenladesystem mit einer solchen Brille und Ladestation.

Aufgabe der vorliegenden Erfindung ist es, die Nachteile aus dem Stand der Technik zu beseitigen, insbesondere eine Verschmutzung und/oder Beschädigung einer Ladeschnittstelle der Brille zu vermeiden und/oder ein zuverlässiges Aufladen der Brille sicherzustellen, wenn diese in eine Ladestation eingelegt ist.

Die Aufgabe wird gelöst durch die unabhängigen Patentansprüche.

Vorgeschlagen wird eine Brille zur Ein-/Ausgabe von visuellen und/oder auditiven Informationen mit einer Glashalterung zum Halten von Brillengläsern. Die Glashalterung weist zumindest eine erste Gelenkfläche auf. Des Weiteren umfasst die Brille zumindest einen, vorzugsweise zwei, Brillenbügel. Der Brillenbügel weist eine zweite Gelenkfläche auf. Die Brille umfasst ein dem Brillenbügel zugeordnetes Bügelgelenk, über das der Brillenbügel, insbesondere in einem Gelenkbereich der Brille, gelenkig mit der Glashalterung verbunden ist. Der Brillenbügel ist derart mit der Glashalterung verbunden, dass die beiden Gelenkflächen im eingeklappten Zustand des Brillenbügels voneinander weggeklappt und im ausgeklappten Zustand des Brillenbügels zueinander hingeklappt sind. Vorzugsweise liegen die beiden Gelenkflächen im hingeklappten Zustand zumindest in einem Bereich aneinander an. Auch umfasst die Brille einen Energiespeicher, der in der Glashalterung und/oder dem Brillenbügel angeordnet ist. Zum Aufladen des Energiespeichers weist die Brille eine Ladeschnittstelle auf. Die Ladeschnittstelle ist an der ersten und/oder zweiten Gelenkfläche angeordnet. Hierdurch ist diese im ausgeklappten Zustand des Brillenbügels von der gegenüberliegenden Gelenkfläche verdeckt. Vorteilhafterweise wird hierdurch das Brillendesign durch die Ladeschnittstelle nicht negativ beeinflusst. Des Weiteren ist die Ladeschnittstelle der einen Gelenkfläche im ausgeklappten Zustand des Brillenbügels durch die gegenüberliegende andere Gelenkfläche vor Verschmutzung und Beschädigung geschützt. Im eingeklappten Zustand des Brillenbügels liegt die Ladeschnittstelle frei, so dass diese mit einer Stromschnittstelle einer Ladestation kontaktiert werden kann.

Vorteilhaft ist es, wenn die Ladeschnittstelle zumindest einen Ladekontakt aufweist. Dieser ist für eine Stromschnittstelle einer Ladestation vorgesehen.

Auch ist es vorteilhaft, wenn der Ladekontakt plan und/oder als Metallfläche ausgebildet ist. Hierdurch können die beiden korrespondierenden Gelenkflächen im ausgeklappten Zustand eng aneinander anliegen.

Vorteilhaft ist es, wenn in der ersten und/oder zweiten Gelenkfläche zwei Ladekontakte, insbesondere nebeneinander, angeordnet sind.

Ebenso bringt es Vorteile mit sich, wenn die erste und/oder zweite Gelenkfläche plan ausgebildet ist.

Vorteile bringt es mit sich, wenn die erste und/oder zweite Gelenkfläche schräg zu einer Längsachse und/oder Querachse des Brillenbügels verläuft.

Auch ist es vorteilhaft, wenn sich die erste und/oder zweite Gelenkfläche radial zu einer Gelenkachse des Bügelgelenks erstreckt.

Des Weiteren ist es vorteilhaft, wenn die erste und/oder zweite Gelenkfläche gegenüber einer Bügelaußenseite des Brillenbügels, insbesondere in einer Brillendraufsicht, um einen Winkel von mehr oder weniger als 90° geneigt ist. Wenn die erste und/oder zweite Gelenkfläche gegenüber der Bügelaußenseite des Brillenbügels um einen Winkel von mehr als 90° geneigt ist, so ist zwischen diesen beiden ein stumpfer Winkel ausgebildet. Wenn die erste und/oder zweite Gelenkfläche gegenüber der Bügelaußenseite des Brillenbügels um einen Winkel von weniger als 90° geneigt ist, so ist zwischen diesen beiden ein spitzer Winkel ausgebildet.

Vorteilhaft ist es, wenn im eingeklappten Zustand der beiden Brillenbügel die zwei in Längsrichtung der Glashalterung voneinander beabstandeten zweiten Gelenkflächen der beiden Brillenbügel in einer Brillendraufsicht zueinander V-förmig geneigt und/oder angeordnet sind. Hierdurch kann sichergestellt werden, dass die Ladeschnittstelle, insbesondere der zumindest eine Ladekontakt, des Brillenbügels zuverlässig mit einer Stromschnittstelle einer Ladestation in Kontakt kommt, wenn die Brille in die Ladestation eingelegt wird.

Auch ist es vorteilhaft, wenn die Brille ein Audiosystem, insbesondere mit einem MEMS-Lautsprecher, aufweist, das mit dem Energiespeicher elektrisch verbunden ist.

Vorgeschlagen wird ferner eine Ladestation zum Laden einer Brille zur Ein-/Ausgabe von visuellen und/oder auditiven Informationen mit einer Brillenaufnahme, in die die Brille im eingeklappten Zustand eingelegt werden kann, und zumindest einer Stromschnittstelle zum Laden eines Energiespeichers der Brille. Die Ladestation weist zumindest eine Ladefläche auf, in der die Stromschnittstelle angeordnet ist.

Vorteilhaft ist es, wenn die Ladefläche schräg zu einer Längsachse und/oder Hochachse der Ladestation verläuft.

Auch ist es vorteilhaft, wenn die Stromschnittstelle magnetisch ausgebildet ist. In diesem Fall wird die Ladeschnittstelle an die Stromschnittstelle gezogen.

Vorteilhaft ist es, wenn die Ladestation zwei zueinander in Längsrichtung der Ladestation beabstandete Ladeflächen aufweist, die zueinander V-förmig geneigt und/oder angeordnet sind. Hierdurch kann sichergestellt werden, dass die Ladeschnittstelle, insbesondere der zumindest eine Ladekontakt, des Brillenbügels zuverlässig mit einer Stromschnittstelle der Ladestation in Kontakt kommt, wenn die Brille in die Ladestation eingelegt wird.

Vorgeschlagen wird ein Brillenladesystem mit einer Brille zur Ein-/Ausgabe von visuellen und/oder auditiven Informationen und einer Ladestation zum Aufladen der Brille. Die Brille und/oder die Ladestation ist gemäß der vorangegangenen Beschreibung ausgebildet, wobei die genannten Merkmale einzeln oder in beliebiger Kombination vorhanden sein können.

Weitere Vorteile der Erfindung sind in dem nachfolgenden Ausführungsbeispiel beschrieben. Es zeigt:
- **Figur 1**: eine schematische, perspektivische Seitenansicht einer Brille,
- **Figur 2**: eine schematische Draufsicht der Brille im Bereich eines Brillenbügels,
- **Figur 3**: ein Brillenladesystem mit einer Brille gemäß Figur 1 und 2 sowie einer Ladestation, in die die Brille eingelegt ist, in einer schematischen Längsschnittdarstellung,
- **Figur 4**: eine perspektivische Rückansicht der Brille aus Figur 1 und 2 im Detail,
- **Figur 5**: eine perspektivische Ansicht des Brillenladesystems aus Figur 3 im Detail, das die Brille gemäß Figur 1, 2 und 4 sowie die Ladestation umfasst, und
- **Figur 6**: einen Längsschnitt durch das Brillenladesystem aus Figur 3 und 5 im Detail.

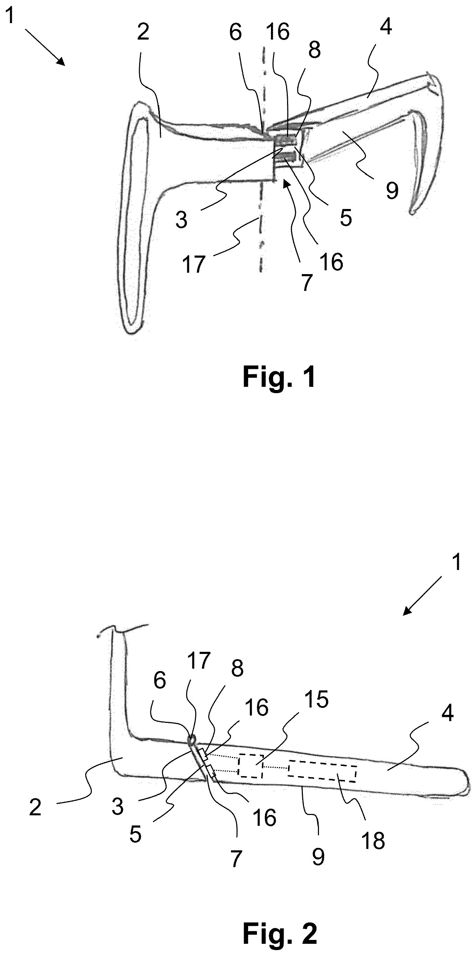

Figur 1, 2 und 4 zeigt eine Brille 1 zur Ein-/Ausgabe von visuellen und/oder auditiven Informationen mit einer Glashalterung 2 zum Halten von Brillengläsern. Die Glashalterung 2 weist zumindest eine erste Gelenkfläche 3 auf. Des Weiteren umfasst die Brille 1 zumindest einen, vorzugsweise zwei, Brillenbügel 4. Der Brillenbügel 4 weist eine zweite Gelenkfläche 5 auf. Die zweite Gelenkfläche 5 ist zur ersten Gelenkfläche 3 korrespondierend ausgebildet. Die Brille 1 umfasst ein dem Brillenbügel 4 zugeordnetes Bügelgelenk 6, über das der Brillenbügel 4, insbesondere in einem Gelenkbereich 7 der Brille 1, gelenkig mit der Glashalterung 2 verbunden ist. Der Brillenbügel 4 ist derart mit der Glashalterung 2 verbunden, dass die beiden Gelenkflächen 3, 5 im eingeklappten Zustand des Brillenbügels 4 voneinander weggeklappt und im ausgeklappten Zustand des Brillenbügels 4 zueinander hingeklappt sind. Vorzugsweise liegen die beiden Gelenkflächen 3, 5 im hingeklappten Zustand zumindest in einem Bereich aneinander an.

Auch umfasst die Brille 1 einen Energiespeicher 15, der in der Glashalterung 2 und/oder dem Brillenbügel 4 angeordnet ist (vgl. Figur 2). In Figur 2 ist der Energiespeicher 15 des Brillenbügels 4 schematisch dargestellt. In den übrigen Figuren wurde der Energiespeicher 15 zur Wahrung der Übersichtlichkeit nicht explizit dargestellt. Zum Aufladen des Energiespeichers 15 weist die Brille 1 eine Ladeschnittstelle 8 auf. Der Energiespeicher 15 ist mit der Ladeschnittstelle 8 elektrisch verbunden. Die Ladeschnittstelle 8 ist an der ersten und/oder zweiten Gelenkfläche 3, 5 angeordnet. Hierdurch ist diese im ausgeklappten Zustand des Brillenbügels 4 von der gegenüberliegenden Gelenkfläche 3, 5 verdeckt. Vorteilhafterweise wird hierdurch das Brillendesign durch die Ladeschnittstelle 8 nicht negativ beeinflusst. Des Weiteren ist hierdurch die in der einen Gelenkfläche 5 angeordnete Ladeschnittstelle 8 von der gegenüberliegenden anderen Gelenkfläche 3 vor Verschmutzung und Beschädigung geschützt.

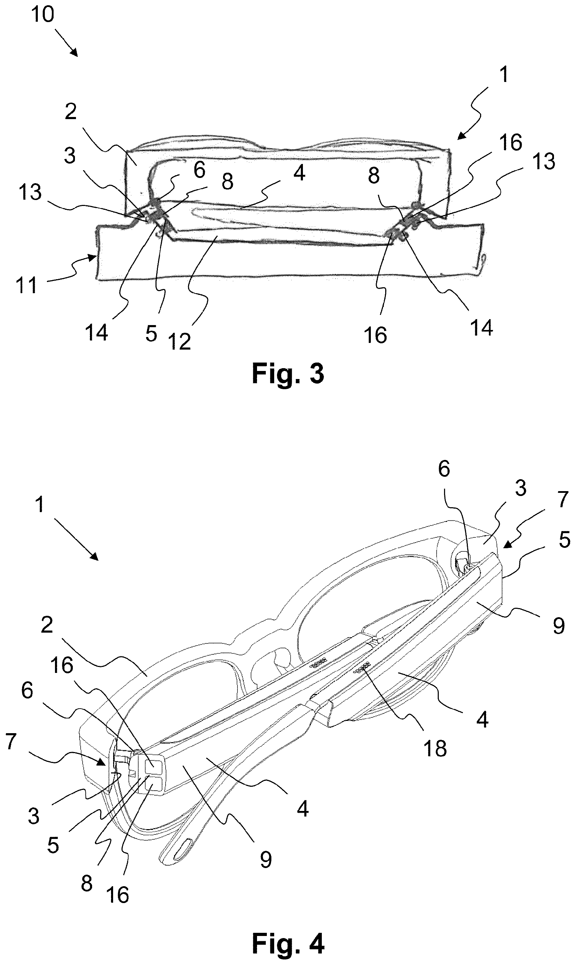

Die Ladeschnittstelle 8 weist, wie in den Figuren 1, 2, 3, 4 und 6 ersichtlich ist, zumindest einen Ladekontakt 16 auf. Dieser ist für eine korrespondierende Stromschnittstelle 13 einer in Figur 3, 5 und 6 gezeigten Ladestation 11 vorgesehen. Der Ladekontakt 16 ist plan und/oder als Metallfläche ausgebildet. In der ersten und/oder zweiten Gelenkfläche 3, 5 sind vorzugsweise zwei Ladekontakte 16, insbesondere nebeneinander, angeordnet. In dem in den Figuren dargestellten Ausführungsbeispiel sind an beiden Brillenbügeln 4 jeweils zwei Ladekontakte 16 angeordnet. Ferner ist die erste und/oder zweite Gelenkfläche 3, 5 plan ausgebildet. Die erste und/oder zweite Gelenkfläche 3, 5 verläuft schräg zu einer Längsachse und/oder Querachse des Brillenbügels 4. Ferner erstreckt sich die erste und/oder zweite Gelenkfläche 5 radial zu einer Gelenkachse 17 des Bügelgelenks 4 (vgl. Figur 1 und 2). Die erste und/oder zweite Gelenkfläche 3, 5 ist plan ausgebildet.

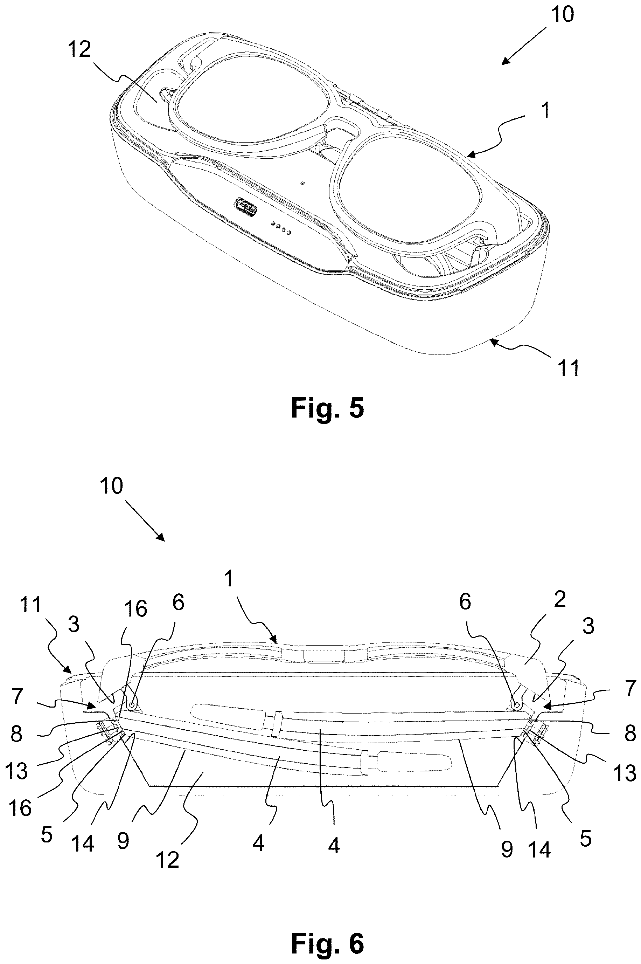

Die erste und/oder zweite Gelenkfläche 3, 5 ist gegenüber einer Bügelaußenseite 9 des Brillenbügels 4 um einen Winkel von weniger oder mehr als 90° geneigt. In dem dargestellten Ausführungsbeispiel ist die zweite Gelenkfläche 5, wie insbesondere aus den Figuren 2 und 6 hervorgeht, in einer Draufsicht gegenüber der Bügelaußenseite 9 um mehr als 90° geneigt. Zwischen der Bügelaußenseite 9 und der zweiten Gelenkfläche 5 ist somit ein stumpfer Winkel ausgebildet. Die erste Gelenkfläche 3 ist zur zweiten Gelenkfläche 5 korrespondierend geneigt. Demnach ist zwischen der Außenseite der Glashalterung 2, die vorzugsweise die Bügelaußenseite 9 gemäß dem dargestellten Ausführungsbeispiel fortführt, und der ersten Gelenkfläche 3 ein spitzer Winkel ausgebildet.

Die Brille 1 weist ein, in Figur 2 schematisch dargestelltes, Audiosystem 18, insbesondere mit einem MEMS-Lautsprecher, auf, das mit dem Energiespeicher 15 elektrisch verbunden ist. In Figur 4 sind Schallaustrittsöffnungen des Audiosystems 18 dargestellt. Diese befinden sich sowohl an der Oberseite als auch an der Unterseite des Brillenbügels 4. In den übrigen Figuren ist das Audiosystem 18 zur Wahrung der Übersichtlichkeit nicht explizit dargestellt.

Figur 3, 5 und 6 zeigt ein Brillenladesystem 10 mit der in Figur 1, 2 und 4 gezeigten Brille 1 zur Ein-/Ausgabe von visuellen und/oder auditiven Informationen. Figur 3 und 6 zeigt eine Längsschnittansicht des Brillenladesystems 10. Das Brillenladesystem 10 umfasst eine Ladestation 11 zum Aufladen der Brille 1. Die Ladestation 11 kann einen vorliegend nicht dargestellten klappbaren Deckel umfassen. Die Brille 1 ist gemäß der vorangegangenen Beschreibung ausgebildet, wobei die genannten Merkmale einzeln oder in beliebiger Kombination vorhanden sein können.

Die Ladestation 11 ist zum Laden der Brille 1 vorgesehen. Sie umfasst eine Brillenaufnahme 12, in die die Brille 1 im eingeklappten Zustand eingelegt werden kann. Die Brillenaufnahme 12 stellt demnach einen Hohlraum zur Verfügung, in den die Brille 1 eingelegt werden kann. Des Weiteren weist die Ladestation 11 zumindest eine Stromschnittstelle 13 zum Laden des Energiespeichers 15 der Brille 1 auf. Die Ladestation 11 weist zumindest eine Ladefläche 14 auf, in der die Stromschnittstelle 13 angeordnet ist. Die Ladefläche 14 ist korrespondierend zur zugeordneten Gelenkfläche 3, 5 des Brillenbügels 4 ausgebildet. Hierfür verläuft die Ladefläche 14 schräg zu einer Längsachse und/oder Hochachse der Ladestation 11. Die Stromschnittstelle 13 ist vorzugsweise magnetisch ausgebildet. Gemäß dem vorliegenden Ausführungsbeispiel umfasst die Ladestation 11 eine erste Stromschnittstelle 13, die dem einen Brillenbügel 4 zugeordnet ist, und eine zweite Stromschnittstelle, die dem anderen Brillenbügel 4 zugeordnet ist. Wie insbesondere aus Figur 3 und 6 hervorgeht, sind im eingeklappten Zustand der beiden Brillenbügel 4 die zwei in Längsrichtung der Glashalterung 2 voneinander beabstandeten zweiten Gelenkflächen 5 der beiden Brillenbügel 4 in der dargestellten Brillendraufsicht zueinander V-förmig geneigt und/oder angeordnet. Des Weiteren sind die beiden zueinander in Längsrichtung der Ladestation 11 beabstandeten Ladeflächen 14 zu den beiden Gelenkflächen 4 korrespondierend und demnach auch zueinander V-förmig geneigt und/oder angeordnet. Hierdurch kann sichergestellt werden, dass die beiden Ladeschnittstellen 8, insbesondere die Ladekontakte 16, der Brillenbügel 4 zuverlässig mit der jeweiligen Stromschnittstelle 13 der Ladestation 11 in Kontakt kommen, wenn die Brille 1 in die Ladestation 11 eingelegt wird.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass kein Widerspruch zur Lehre der unabhängigen Ansprüche entsteht.

### Bezugszeichenliste

- 1: Brille
- 2: Glashalterung
- 3: erste Gelenkfläche
- 4: Brillenbügel
- 5: zweite Gelenkfläche
- 6: Bügelgelenk
- 7: Gelenkbereich
- 8: Ladeschnittstelle
- 9: Bügelaußenseite
- 10: Brillenladesystem
- 11: Ladestation
- 12: Brillenaufnahme
- 13: Stromschnittstelle
- 14: Ladefläche
- 15: Energiespeicher
- 16: Ladekontakt
- 17: Gelenkachse
- 18: Audiosystem

## Patentansprüche

1. Brille (1) zur Ein-/Ausgabe von visuellen und/oder auditiven Informationen mit
einer Glashalterung (2) zum Halten von Brillengläsern, die zumindest eine erste Gelenkfläche (3) aufweist,
zumindest einem Brillenbügel (4), der eine zweite Gelenkfläche (5) aufweist,
einem dem Brillenbügel (4) zugeordneten Bügelgelenk (6), über das der Brillenbügel (4) gelenkig mit der Glashalterung (2) derart verbunden ist, dass die beiden Gelenkflächen (3, 5) im eingeklappten Zustand des Brillenbügels (4) voneinander weggeklappt und im ausgeklappten Zustand des Brillenbügels (4) zueinander hingeklappt sind, einem Energiespeicher (15), der in der Glashalterung (2) und/oder dem Brillenbügel (4) angeordnet ist, und
einer Ladeschnittstelle (8) zum Aufladen des Energiespeichers (15), **dadurch gekennzeichnet,**
**dass** die Ladeschnittstelle (8) an der ersten und/oder zweiten Gelenkfläche (3, 5) angeordnet ist.

2. Brille gemäß dem vorangegangenen Anspruch, **dadurch gekennzeichnet, dass** die Ladeschnittstelle (8) zumindest einen Ladekontakt (16) aufweist.

3. Brille gemäß einem der vorangegangenen Ansprüche, **dadurch gekennzeichnet, dass** der Ladekontakt (16) plan und/oder als Metallfläche ausgebildet ist.

4. Brille gemäß einem der vorangegangenen Ansprüche, **dadurch gekennzeichnet, dass** in der ersten und/oder zweiten Gelenkfläche (3, 5) zwei Ladekontakte (16), insbesondere nebeneinander, angeordnet sind.

5. Brille gemäß einem der vorangegangenen Ansprüche, **dadurch gekennzeichnet, dass** die erste und/oder zweite Gelenkfläche (3, 5) plan ausgebildet ist.

6. Brille gemäß einem der vorangegangenen Ansprüche, **dadurch gekennzeichnet, dass** die erste und/oder zweite Gelenkfläche (3, 5) schräg zu einer Längsachse und/oder Querachse des Brillenbügels (4) verläuft.

7. Brille gemäß einem der vorangegangenen Ansprüche, **dadurch gekennzeichnet, dass** sich die erste und/oder zweite Gelenkfläche (3, 5) radial zu einer Gelenkachse (17) des Bügelgelenks (6) erstreckt.

8. Brille gemäß einem der vorangegangenen Ansprüche, **dadurch gekennzeichnet, dass** die erste und/oder zweite Gelenkfläche (3, 5) gegenüber einer Bügelaußenseite (9) des Brillenbügels (4) um einen Winkel von mehr oder weniger als 90° geneigt ist.

9. Brille gemäß einem der vorangegangenen Ansprüche, **dadurch gekennzeichnet, dass** im eingeklappten Zustand der Brillenbügel (4) die zwei in Längsrichtung der Glashalterung (2) voneinander beabstandeten zweiten Gelenkflächen (5) der beiden Brillenbügel (4) in einer Brillendraufsicht zueinander V-förmig geneigt und/oder angeordnet sind.

10. Brille gemäß einem der vorangegangenen Ansprüche, **dadurch gekennzeichnet, dass** die Brille (1) ein Audiosystem (18), insbesondere mit einem MEMS-Lautsprecher, aufweist, das, mit dem Energiespeicher (15) elektrisch verbunden ist.

11. Ladestation (11) zum Laden einer Brille (1) zur Ein-/Ausgabe von visuellen und/oder auditiven Informationen
mit einer Brillenaufnahme (12), in die die Brille (1) im eingeklappten Zustand eingelegt werden kann, und
zumindest einer Stromschnittstelle (13) zum Laden eines Energiespeichers (15) der Brille (1),
**dadurch gekennzeichnet,**
**dass** die Ladestation (11) zumindest eine Ladefläche (14) aufweist, in der die Stromschnittstelle (13) angeordnet ist.

12. Ladestation gemäß dem vorangegangenen Anspruch, **dadurch gekennzeichnet, dass** die Ladefläche (14) schräg zu einer Längsachse und/oder Hochachse der Ladestation (11) verläuft.

13. Ladestation gemäß einem der vorangegangenen Ansprüche, **dadurch gekennzeichnet, dass** die Stromschnittstelle (13) magnetisch ausgebildet ist.

14. Ladestation gemäß einem der vorangegangenen Ansprüche, **dadurch gekennzeichnet, dass** die Ladestation (11) zwei zueinander in Längsrichtung der Ladestation (11) beabstandete Ladeflächen (14) aufweist, die zueinander V-förmig geneigt und/oder angeordnet sind.

15. Brillenladesystem mit
einer Brille (1) zur Ein-/Ausgabe von visuellen und/oder auditiven Informationen und
einer Ladestation (11) zum Aufladen der Brille (1),
**dadurch gekennzeichnet,**
**dass** die Brille (1) und/oder die Ladestation (11) nach einem oder mehreren der vorherigen Ansprüche ausgebildet ist.
